# EUROPEAN PATENT SPECIFICATION

(11) **EP 0 309 150 B1**
(45) Date of publication and mention of the grant of the patent: **23.11.1994**
(21) Application number: 88308528.4
(22) Date of filing: 15.09.1988
(51) Int. Cl.: G11B 20/14, G11B 27/00, G11B 20/10

(54) **Data reproducing apparatus**
Datenwiedergabegerät
Appareil de reproduction de données

(30) Priority: 21.09.1987 JP 238570/87
(43) Date of publication of application: 29.03.1989
(73) Proprietor: SONY CORPORATION, Tokyo 141 (JP)
(72) Inventor: Murabayashi, Noboru c/o Patents Division, Shinagawa-ku Tokyo 141 (JP); Kanota, Keiji c/o Patents Division, Shinagawa-ku Tokyo 141 (JP)
(74) Representative: Pilch, Adam John Michael

(56) References cited:
- DE-A- 3 631 369
- GB-A- 2 026 288
- US-A- 4 534 044
- US-A- 4 577 241
- US-A- 4 644 419
- PATENT ABSTRACTS OF JAPAN vol. 9, no. 167 (P-372)(1890) 12 July 1985,& JP-A-60 043264
- PATENT ABSTRACTS OF JAPAN vol. 9, no. 154 (E-325)(1877) 28 June 1985,& JP-A-60 033791

## Description

This invention relates to data reproducing apparatus and, more particularly, to data reproducing apparatus for receiving digital data recorded on a magnetic recording medium such as magnetic tape.

In a video tape recorder (VTR), for example, of an 8-mm video format, an audio signal is pulse code modulation (PCM)-encoded and compressed along the time axis. The signal is then modulated by biphase-mark modulation and recorded on an audio track which is formed adjacent and parallel to a video track. Such a VTR is disclosed in US Patent No. US-A-4 551 771 assigned to the present applicants.

Figure 5 of the accompanying drawings shows a known 8-mm VTR track pattern. Parallel magnetic tracks (TRA, TRB) are sequentially formed on a magnetic tape T. Each track is divided into a video track area TRVD and a compressed PCM audio track area TRAD.

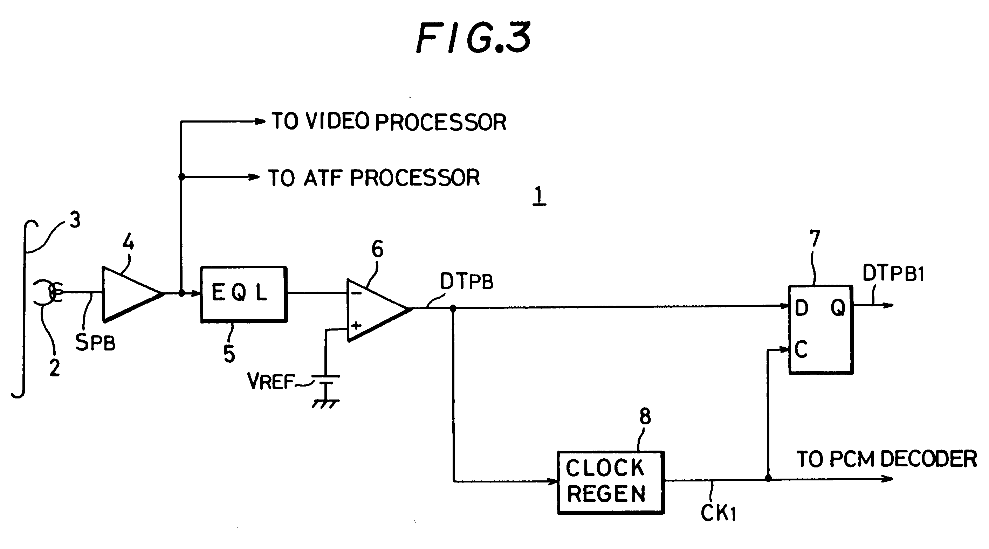

A previously-proposed data reproducing apparatus 1 for reproducing audio data recorded on an audio track by a biphase-mark modulation system has an arrangement as shown in Figure 3 of the accompanying drawings. A regenerated clock signal CK1 of a repetitive frequency included in a reproduced signal SPB, picked up from a magnetic tape 3 by a rotary reproducing head 2, is extracted. The reproduced signal SPB (DTPB1) is demodulated, based on the regenerated clock signal CK1.

For example, the reproduced signal SPB obtained at a timing at which the rotary reproducing head 2 travels along the video track of the magnetic tape 3, through a switching circuit (not shown) for alternately using two rotary heads, is supplied to a video signal processing circuit (not shown) and an automatic track following (ATF) circuit (not shown) through the switching circuit (not shown). The reproduced signal SPB obtained at a timing at which the reproducing head 2 scans the audio track of the magnetic tape 3 is supplied to an equaliser 5 through a reproducing amplifier 4. The equalised reproduced signal is supplied to the inverting input terminal of a comparator 6 having an operational amplifier arrangement.

The non-inverting input terminal of the comparator 6 is earthed or grounded via a power supply VREF for generating a predetermined reference voltage. The comparator 6 compares the reproduced signal SPB with the reference voltage. A reproduced digital signal DTPB is supplied as the comparison result to an input terminal D of a synchronisation circuit 7 having a D flip-flop arrangement, and is also supplied to a clock regeneration circuit 8 having a phase locked loop (PLL) circuit arrangement.

The clock regeneration circuit 8 compares phases of a reference signal of a predetermined frequency obtained by an internal voltage controlled oscillator (VCO) and a clock component of a predetermined frequency included in the input reproduced digital signal DTPB. Thus, the regenerated clock signal CK1 can be obtained which is correctly phase-locked with the clock component. The regenerated clock signal CK1 is supplied to a clock input terminal C of the synchronisation circuit 7, and is also supplied to a PCM demodulation processor or a PCM decoder (not shown).

The synchronisation circuit 7 synchronises the reproduced digital signal DTPB with the regenerated clock signal CK1, and sends it to the following demodulation processor (not shown). The demodulation processor demodulates the input reproduced digital signal DTPB1 based on the regenerated clock signal CK1.

In recent years, it has been proposed that a new modulation system such as that employed in a rotary-head type digital audio tape recorder (R-DAT) may be used as a recording system of an audio signal in the 8-mm VTR instead of the previous type of biphase-mark modulation system (referred to as the first type of modulation hereinafter) described in US-A-4 551 771. In this new system, an audio signal is PCM-encoded at a considerably higher bit rate than in the first modulation system, is modulated by the so-called 8-10 modulation system (referred to as the second type of modulation hereinafter) and is recorded on the audio track.

A similar modulation system to this second type of modulation system is described in US Patents No. US-A-4 617 552 and No. US-A-4 577 180 in more detail.

The 8-10 modulation system is a system of converting 8-bit data into 10-bit data and recording the 10-bit data. Thus, continuous generation of "1"s and "0"s of the data can be prevented. Therefore, the reproduced data does not include a DC component, and clock regeneration upon reproduction can be facilitated.

However, in practice, the first and second types of modulation have different frequency bands of recording signals, and have a large difference in sampling clock frequency. That is, the first type of modulation has a sampling clock frequency of 11.6 MHz, while the second type of modulation has a sampling clock frequency of 14.8 MHz. For this reason, these systems have different Nyquist conditions of electromagnetic conversion, and different noise spectrum distributions.

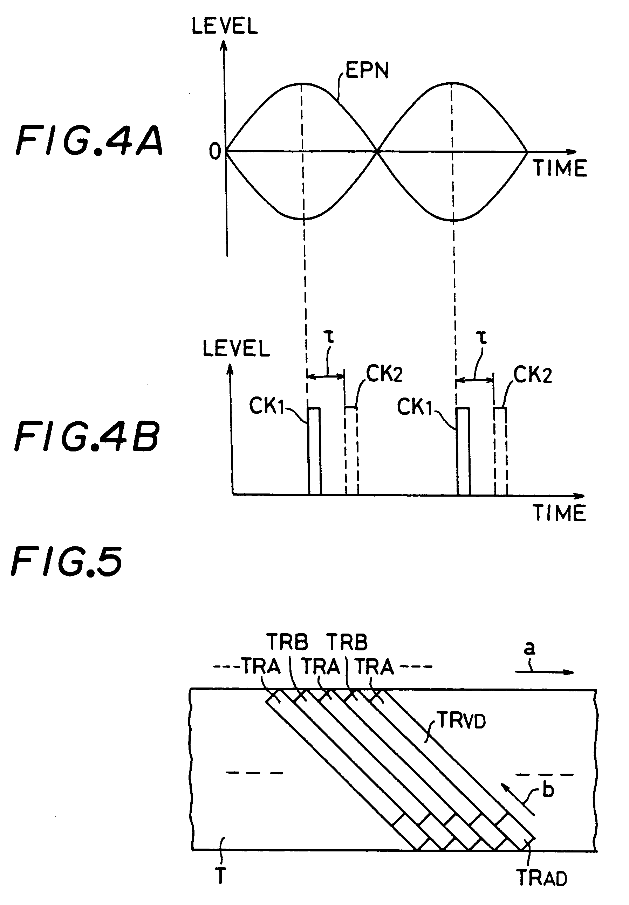

Figure 4A of the accompanying drawings shows an eye pattern EPN of the reproduced signal SPB of the first type of modulation in the data reproducing apparatus 1 shown in Figure 3. The clock regeneration circuit 8 obtains the regenerated clock signal CK1 (indicated by a solid line in Figure 4B of the accompanying drawings) which rises at a timing at which the crest value of the eye pattern EPN is maximum. When a regenerated clock signal CK2 is to be obtained from the reproduced signal SPB of the second type of modulation using this clock regeneration circuit 8, a phase shift of time τ occurs, as indicated by a broken line in Figure 4B. As a result, the bit error ratio of demodulated data demodulated by the demodulation processor is increased.

US Patent No. US-A-4 534 044 discloses a disc read data recovery system in which a phase locked loop phase compares a signal generated by its oscillator and associated dividers with the incoming data stream to provide differing signals depending on whether the incoming data is leading or lagging the clock signal. For different types of incoming signal, different frequency dividers in the phase locked loop may be selected, and the output clock signal is also subject to differing frequency division.

According to the present invention, there is provided data reproducing apparatus for receiving digital data recorded on a magnetic recording medium by one of first and second types of modulation having different recording densities, obtaining a regenerated clock signal based on a clock component included in the received data by a clock regeneration circuit having a phase locked loop circuit arrangement, and demodulating the received data based on the regenerated clock signal to reproduce digital data, wherein said clock regeneration circuit comprises:
a voltage controlled oscillator;
a low-pass filter circuit for switching a time constant in correspondence with the first or second type of modulation and for providing a control voltage for controlling said voltage controlled oscillator based on a phase comparison result of the received data and an output reference signal from said voltage controlled oscillator; and
control means for generating a control signal to control switching of said low-pass filter circuit and for controlling switching of the frequency of the signal supplied to said low pass filter circuit from said voltage controlled oscillator for phase comparison;
characterised in that:
a resonance circuit is associated with said voltage controlled oscillator for switching the frequency of said reference signal output by said voltage controlled oscillator in dependence upon said control signal; and
said control means includes processing means controlled by a stored table associating address data, including said type of modulation, with a control signal in order to control switching of said resonance circuit and said low-pass filter circuit.

The frequency of the reference signal of the voltage controlled oscillator (VCO) and the resonance or tank circuit and the time constant of the low-pass filter (LPF) of the clock regeneration circuit are switch-controlled in correspondence with the type of modulation on the magnetic recording medium. For this reason, the clock regeneration circuit has a lock frequency corresponding to the first or second type of modulation. Thus, the regenerated clock signal can be obtained using the clock regeneration circuit.

In this manner, when modulation systems having different recording densities are used, demodulation processing can be performed using the corresponding regenerated clock signal. Thus, the bit error ratio during demodulation can be decreased.

Accordingly, a preferred embodiment of the present invention provides a data reproducing apparatus which can obtain a regenerated clock signal in correspondence with modulation systems of different recording densities.

The invention will now be described by way of example with reference to the accompanying drawings, throughout which like parts are referred to by like references, and in which:
Figure 1 is a block diagram showing an embodiment of the present invention;
Figure 2 is a table showing the relationship between first, second and third discrimination results in a control circuit and selected switch terminals in the circuit of Figure 1;
Figure 3 is a block diagram showing a previously-proposed data reproducing apparatus;
Figures 4A and 4B are signal waveform charts showing an eye pattern and phases of regenerated clock signals; and
Figure 5 is a view showing a track pattern on a tape.

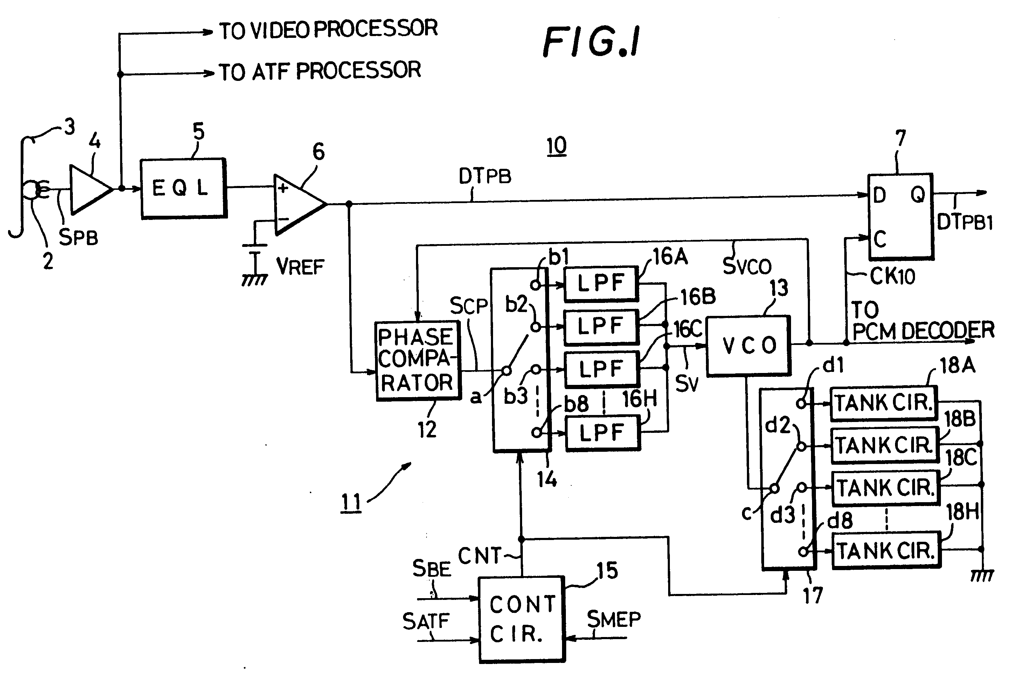

The same reference numerals in Figure 1 denote similar parts to those in Figure 3. Referring to Figure 1, a data reproducing apparatus 10 according to an embodiment of the present invention includes a clock regeneration circuit 11 switch-controlling a lock frequency of a PLL circuit based on a control signal CNT from a control circuit 15.

More specifically, the clock regeneration circuit 11 comprises a PLL circuit. A phase comparator 12 compares phases of an input reproduced digital signal DTPB and an oscillation output SVCO from a voltage controlled oscillator (VCO) 13. A comparison output SCP is supplied as the comparison result to an input terminal a of a first switching circuit 14 having an analog switch arrangement.

The first switching circuit 14 selects one of eight output terminals b1 to b8 for connection to the one input terminal a based on the control signal CNT supplied from the control circuit 15 which may be, for example, a microcomputer arrangement. The output terminals b1 to b8 are connected to the VCO 13 through respective first to eighth low-pass filter (LPF) circuits 16A to 16H having different bandpass characteristics.

The VCO 13 is connected to one input terminal c for switchable connection to one of eight output terminals d1 to d8 of a second switching circuit 17 having an analog switch arrangement based on the control signal CNT input from the control circuit 15, in order to set an oscillation frequency of the oscillation output SVCO serving as the reference signal. The switching circuit 17 selectively connects first to eighth tank circuits 18A to 18H having different resonance frequencies.

The second switching circuit 17 is switch-controlled based on the control signal CNT input from the control circuit 15, so that the VCO 13 generates the oscillation output SVCO of the predetermined frequency. The first switching circuit 14 is switch-controlled to be interlocked with the second switching circuit 17, so that one of the LPFs 16A to 16H corresponding to the oscillation output SVCO is used. Thus, the lock frequency corresponding to the input reproduced digital signal DTPB is controlled by the control signal CNT from the control circuit 15.

Based on, for example, a bit error rate signal SBE, the control circuit 15 discriminates if digital data recorded on the magnetic tape 3 is data of the first type of modulation (as the biphase-mark modulation system) or data of the second type of modulation (as the 8-10 modulation system), and obtains a first discrimination result.

In this embodiment, in addition to the first discrimination result, the control circuit 15 discriminates the type of the magnetic tape 3 in use based on a tape type signal SMEP obtained from a mark formed on an 8-mm video tape cassette. More specifically, the control circuit 15 discriminates if the magnetic tape 3 in use is a coated type magnetic tape (to be referred to as an MP tape hereinafter) or a vapour deposition type magnetic tape (to be referred to as an ME tape hereinafter) having different phase characteristics from the MP tape, thus obtaining a second discrimination result. Based on, for example, an ATF error signal SATF obtained from an ATF circuit (not shown), the control circuit 15 further discriminates if data is recorded in a standard recording/reproducing mode (to be referred to as an SP mode hereinafter) or in a long-time or long-play recording/reproducing mode (to be referred to as an LP mode hereinafter), thus obtaining a third discrimination result.

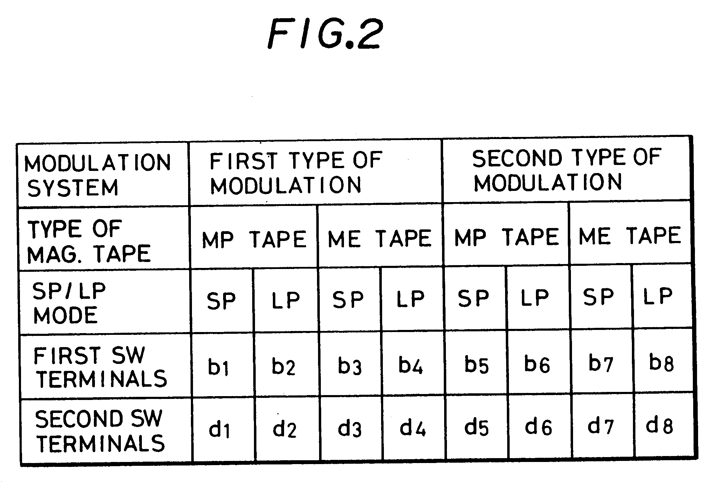

The control circuit 15 combines the first, second and third discrimination results as shown in the table of Figure 2, and sends, to the first and second switching circuits 14 and 17, the control signal CNT for selecting one of the first to eighth output terminals b1 to b8 of the first switching circuit 14 and one of the first to eighth output terminals d1 to d8 of the second switching circuit 17.

Note that the control circuit 15 can easily select the signal CNT for switching the switching circuits 14 and 17 based on the first to third discrimination result input signals SRE, SATF and SMEP if a microprocessor is used and stores the table representing the chart shown in Figure 2.

In this manner, the clock regeneration circuit 11 can obtain the regenerated clock signal CK10 having an optimal phase in accordance with the first or second type of modulation, the type of magnetic tape, and the recording/reproducing mode.

According to the above arrangement, when a different type of modulation, a different type of magnetic tape, and a different recording/reproducing mode are used, the lock frequency of the clock regeneration circuit can be switch-controlled correspondingly. Thus, data can be demodulated using the regenerated clock signal which constantly has the correct phase. For this reason, a data reproducing apparatus capable of greatly decreasing the bit error ratio can be easily realised.

In the above embodiment, the biphase-mark modulation system or the 8-10 modulation system is used for modulation. However, the present invention is not limited to this, but is applicable to any case in which a magnetic tape on which digital data recorded using a plurality of modulation methods of different recording densities is reproduced.

In the above embodiment, the types of magnetic tape and recording/reproducing mode are discriminated in addition to the modulation system, and the lock frequency of the clock regeneration circuit is selected correspondingly, thereby obtaining a regenerated clock signal. However, the present invention is not limited to this. For example, the type of reproducing operation mode of the magnetic tape such as a slow reproducing mode, a double-speed reproducing mode and the like can be added. In addition, the type of recording/reproducing mode or reproducing operation mode of the magnetic tape can be discriminated, and the lock frequency of the clock regeneration circuit can be selected, so that the same effect as in the above embodiment can be obtained.

In the above embodiment, the case has been described wherein the present invention is applied to an audio signal system of an 8-mm VTR. However, the present invention is not limited to this. For example, the present invention can be suitably applied to a data reproducing apparatus such as an R-DAT apparatus for reproducing digital data.

According to the above description, when a regenerated clock signal included in a picked-up output is obtained using a clock regeneration circuit having a phase locked loop circuit arrangement, the frequency of a reference signal of the phase locked loop and the time constant of a low-pass filter circuit are switched in accordance with the first or second type of modulation. As a result, the PLL lock frequency corresponding to the first or second type of modulation can be obtained, and a regenerated clock signal which has the correct phase can be obtained.

Therefore, a data reproducing apparatus can be provided which greatly reduces the bit error ratio even if modulation systems having different recording densities are used.

## Claims

1. Data reproducing apparatus for receiving digital data recorded on a magnetic recording medium (3) by one of first and second types of modulation having different recording densities, obtaining a regenerated clock signal (CK10) based on a clock component included in the received data by a clock regeneration circuit (11) having a phase locked loop circuit arrangement, and demodulating the received data based on the regenerated clock signal (CK10) to reproduce digital data, wherein said clock regeneration circuit (11) comprises:
a voltage controlled oscillator (13);
a low-pass filter circuit (16A to 16H) for switching a time constant in correspondence with the first or second type of modulation and for providing a control voltage (SV) for controlling said voltage controlled oscillator (13) based on a phase comparison result of the received data and an output reference signal (SVCO) from said voltage controlled oscillator (13); and
control means (15) for generating a control signal (CNT) to control switching of said low-pass filter circuit (16A to 16H) and for controlling switching of the frequency of the signal supplied to said low pass filter circuit (16A to 16H) from said voltage controlled oscillator (13) for phase comparison;
characterised in that:
a resonance circuit (17, 18A to 18H) is associated with said voltage controlled oscillator (13) for switching the frequency of said reference signal (SVCO) output by said voltage controlled oscillator (13) in dependence upon said control signal (CNT); and
said control means (15) includes processing means controlled by a stored table (Figure 2) associating address data, including said type of modulation, with a control signal in order to control switching of said resonance circuit (17, 18A to 18H) and said low-pass filter circuit (16A to 16H).

2. Apparatus according to claim 1, wherein when a magnetic tape (3) is used as said magnetic recording medium, said address data includes data representative of the type of the magnetic tape (3).

3. Apparatus according to claim 1, wherein when a magnetic tape (3) is used as said magnetic recording medium, said address data includes data representative of the type of recording/reproducing mode of said magnetic tape (3).

4. Apparatus according to claim 3, wherein the recording/reproducing mode has a mode wherein a plurality of transportation speeds of said magnetic tape (3) are used during a recording operation, and a reproducing operation is performed using a plurality of speeds corresponding to the recording transportation speeds.

5. Apparatus according to claim 1, wherein when a magnetic tape (3) is used as said magnetic recording medium, said address data includes data representative of the type of reproducing operation mode of said magnetic tape (3).

6. Apparatus according to claim 5, wherein the reproducing operation mode is performed at reproducing speeds different from the recording transportation speeds of said magnetic tape (3).

7. Apparatus according to any one of the preceding claims, wherein said control means (15) is responsive to a signal (SBE) indicative of bit error rate in the reproduced digital data in order to discriminate between the first and second types of modulation.

8. Apparatus according to any one of the preceding claims, wherein the digital data is audio data compressed along a time axis, and which is recorded on an audio PCM data area (TRAD) divided from a video signal area (TRVD) to be part of each track (TRA,TRB) successively formed on a tape (3).

## Patentansprüche

1. Datenwiedergabegerät zum Empfang von digitalen Daten, die auf einem magnetischen Aufzeichnungsmedium (3) durch eine von einer ersten und einer zweiten Art der Modulation mit unterschiedlichen Aufzeichnungsdichten aufgezeichnet sind, zum Erhalten eines regenerierten Taktsignals (CK10), das auf einer Taktkomponente basiert, die in den erhaltenen Daten enthalten ist, durch eine Taktregenerierungsschaltung (11) mit einer Schaltungsanordnung zur Phasenregelung und zur Demodulation der empfangenen Daten basierend auf dem regenerierten Taktsignal (CK10) um digitale Daten wiederzugeben, worin die besagte Taktregenerierungsschaltung (11) folgendes enthält:
einen spannungsgesteuerten Osziallator (13);
eine Tiefpaßfilterschaltung (16A - 16H) zum Schalten einer Zeitkonstanten, die mit der ersten oder zweiten Art der Modulation korrespondiert, und zur Bereitstellung einer Steuerspannung (SV) zur Steuerung des spannungsgesteuerten Oszillators (13), basierend auf einem Ergebnis des Phasenvergleichs der erhaltenen Daten und eines Ausgangsreferenzsignals (SVCO) von dem spannungsgesteuerten Oszillator (13); und
Steuermittel (15) zur Erzeugung eines Steuerungssignales (CNT) zur Steuerung der Schaltvorgänge der Tiefpaßfilterschaltung (16A - 16H), und zur Steuerung der Schaltvorgänge der Frequenz des an die Tiefpaßfilterschaltung (16A - 16H) von dem spannungsgesteuerten Oszillator (13) gelieferten Signales zum Phasenvergleich; **dadurch gekennzeichnet**, daß
eine Resonanzschaltung (17, 18A - 18H) verbunden ist mit besagtem spannungsgesteuerten Oszillator (13) zum Schalten der Frequenz des Referenzsignales (SVCO), das durch den spannungsgesteuerten Osziallator (13) ausgegeben wird in Abhängigkeit von dem Steuersignal (CNT); und
die Steuermittel (15) Bearbeitungsmittel beinhalten, die gesteuert werden durch eine gespeicherte Tabelle (Figur 2), die die Art der Modulation beinhaltende Adressierdaten mit einem Steuersignal verbinden, um das Schalten der Resonanzschaltung (17, 18A - 18H) und der Tiefpaßfilterschaltung (16A - 16H) zu steuern.

2. Gerät nach Anspruch 1, worin, wenn ein Magnetband (3) als das magnetische Aufzeichnungsmittel benutzt wird, die Adressierdaten Daten enthalten, die repräsentativ sind für die Art des Magnetbandes (3).

3. Gerät nach Anspruch 1, worin, wenn ein Magnetband (3) als das magnetische Aufzeichnungsmittel benutzt wird, die Adressierdaten Daten enthalten, die repräsentativ sind für die Art des Aufzeichnungs/Wiedergabemodus des Magnetbandes (3).

4. Gerät nach Anspruch 3, worin der Aufzeichnungs/Wiedergabemodus einen Modus beinhaltet, worin eine Vielzahl von Transportgeschwindigkeiten des Magnetbandes (3) während eines Aufzeichnungsvorganges benutzt werden und ein Wiedergabevorgang unter Benutzung einer Vielzahl von Geschwindigkeiten entsprechend der Aufzeichnungs-Transportgeschwindigkeiten ausgeführt wird.

5. Gerät nach Anspruch 1, worin, wenn ein Magnetband (3) als das magnetische Aufzeichnungsmedium benutzt wird, die Adressierdaten Daten enthalten, die repräsentativ sind für die Art des Wiedergabeausführungsmodus des Magnetbandes (3).

6. Gerät nach Anspruch 5, worin der Wiedergabeausführungsmodus mit Wiedergabegeschwindigkeiten ausgeführt wird, die sich von den Aufzeichnungstransportgeschwindigkeiten des Magnetbandes (3) unterscheiden.

7. Gerät nach einem der vorhergehenden Ansprüche, worin das Steuermittel (15) auf ein Signal (SBE) anspricht, das eine Bitfehlerrate in den wiedergegebenen digitalen Daten anzeigt, um zwischen der ersten und zweiten Art der Modulation zu diskriminieren.

8. Gerät nach einem der vorhergehenden Ansprüche, worin die digitalen Daten Audiodaten sind, die entlang einer Zeitachse komprimiert sind und die in einem Audio-PCM Datenbereich (TRAD) getrennt von einem Videosignalbereich (TRVD) aufgezeichnet sind, um Teil einer jeden Spur (TRA, TRB) zu sein, die aufeinanderfolgend auf einem Band (3) ausgebildet sind.

## Revendications

1. Appareil de reproduction de données pour recevoir des données numériques enregistrées sur un support d'enregistrement magnétique (3) par l'un de premier et second types de modulation ayant différentes densités d'enregistrement, pour obtenir un signal d'horloge régénéré (CK10) selon une composante d'horloge incluse dans les données reçues par un circuit régénérateur d'horloge (11) ayant un agencement de circuit en boucle à blocage de phase, et pour démoduler les données reçues selon le signal d'horloge régénéré (CK10) afin de reproduire des données numériques, dans lequel ledit circuit régénérateur d'horloge (11) comprend :
un oscillateur commandé en tension (13) ;
un circuit de filtres passe-bas (16A à 16H) pour changer de constante de temps en correspondance avec le premier ou le second type de modulation et pour fournir une tension de commande (CV) afin de commander ledit oscillateur commandé en tension (13) selon le résultat de la comparaison des phases des données reçues et d'un signal de référence de sortie (SVCO) dudit oscillateur commandé en tension (13) ; et,
un moyen de commande (15) pour engendrer un signal de commande (CNT) afin de commander la commutation dudit circuit de filtres passe-bas (16A à 16H) et pour commander le changement de la fréquence du signal fourni audit circuit de filtres passe-bas (16A à 16H) par ledit oscillateur commandé en tension (13) pour une comparaison de phases ;
caractérisé en ce que :
un circuit de résonance (17, 18A à 18H) est associé audit oscillateur commandé en tension (13) pour changer la fréquence dudit signal de référence (SVCO) sorti par ledit oscillateur commandé en tension (13) selon ledit signal de commande (CNT) ; et,
ledit moyen de commande (15) inclut un moyen de traitement commandé par une table mémorisée (Figure 2) associant des données d'adresse, incluant ledit type de modulation, avec un signal de commande afin de commander la commutation dudit circuit de résonance (17, 18A à 18H) et dudit circuit de filtres passe-bas (16A à 16H).

2. Appareil selon la revendication 1, dans lequel, quand une bande magnétique (3) est utilisée comme dit support d'enregistrement magnétique, lesdites données d'adresse incluent des données représentant le type de la bande magnétique (3).

3. Appareil selon la revendication 1, dans lequel, quand une bande magnétique (3) est utilisée comme dit support d'enregistrement magnétique, lesdites données d'adresse incluent des données représentant le type de mode d'enregistrement/de reproduction de ladite bande magnétique (3).

4. Appareil selon la revendication 3, dans lequel le mode d'enregistrement/de reproduction comporte un mode dans lequel une pluralité de vitesses de défilement de ladite bande magnétique (3) sont mises en oeuvre pendant une opération d'enregistrement, et une opération de reproduction est exécutée par la mise en oeuvre d'une pluralité de vitesses correspondant aux vitesses de défilement pendant un enregistrement.

5. Appareil selon la revendication 1, dans lequel, quand une bande magnétique (3) est utilisée comme dit support d'enregistrement magnétique, lesdites données d'adresse incluent des données représentant le type de mode d'opération de reproduction de ladite bande magnétique (3).

6. Appareil selon la revendication 5, dans lequel le mode d'opération de reproduction est exécuté à des vitesses de reproduction différentes des vitesses de défilement de ladite bande magnétique (3) pendant un enregistrement.

7. Appareil selon l'une quelconque des revendications 1 à 6, dans lequel ledit moyen de commande (15) réagit à un signal (SBE) indiquant le taux d'erreurs sur les bits dans les données numériques reproduites afin de faire une discrimination entre le premier et le second type de modulation.

8. Appareil selon l'une quelconque des revendications 1 à 7, dans lequel les données numériques sont des données sonores comprimées le long d'un axe des temps, et qui sont enregistrées dans une zone de données sonores modulées en modulation MIC (TRAD) divisée à partir d'une zone de signaux vidéo (TRVD) pour faire partie de chaque piste (TRA, TRB) successivement formée sur une bande (3).
